**Europäisches Patentamt**

**European Patent Office**

**Office européen des brevets**

(19)

(11) Publication number: **0 108 433**
**B1**

(12) # EUROPEAN PATENT SPECIFICATION

(45) Date of publication of patent specification: **22.10.86**

(21) Application number: **83201366.8**

(22) Date of filing: **19.11.79**

(60) Publication number of the earlier application in accordance with Art. 76 EPC: **0 040 191**

(51) Int. Cl.⁴: **G 01 P 5/02,** G 01 P 13/00, G 01 F 1/28

(54) **Gas flow sensing device.**

(43) Date of publication of application:
**16.05.84 Bulletin 84/20**

(45) Publication of the grant of the patent:
**22.10.86 Bulletin 86/43**

(84) Designated Contracting States:
**DE FR GB SE**

(56) References cited:
**US-A-3 465 586**
**US-A-3 477 289**
**US-A-3 608 374**
**US-A-3 762 876**

(73) Proprietor: **APPLIED DEVICES CORPORATION**
c/o **431 Seabreeze Avenue**
**Palm Beach Florida 33480 (US)**

(72) Inventor: **Pittman, Roland**
**511 Oak Haven Drive**
**Altamonte Springs Florida 32701 (US)**

(74) Representative: **Marsh, Roy David et al**
**Brewer & Son 5-9, Quality Court Chancery Lane**
**London WC2A 1HT (GB)**

Courier Press, Leamington Spa, England.

## Description

This invention relates to a gas flow sensing device, and is more particularly concerned with a low cost, accurate and simplified device of this type which is highly suitable for use in aircraft. It will, of course, be apparent that the invention may be advantageously employed in other fields.

United States Patent Specification US—A—3,447,289 describes a fluid flow sensing device comprising a longitudinal plate cantilevered from one end of a cylindrical body. The longitudinal axis of the plate is parallel to the longitudinal axis of the body. An output voltage is produced by the device as the result of a bending of the longitudinal plate about an axis normal to the axis of the body in response to fluid flow in a direction perpendicular to the axis of the body. More specifically, the longitudinal plate and cylindrical body are parts of a unitary probe which, in use, is inserted into a hydraulic circuit. The bending of the longitudinal plate by pressurized liquid in the hydraulic circuit effects a coreponding bending of the cylindrical body which sets up tensile and compressive bending stresses at respective wall areas of the cylindrical body. Resistance-type strain gages disposed at these body wall areas are respectively employed as variable resistance arms of a four-arm Wheatstone bridge producing a direct output voltage, sensed by a galvanom-meter connected across the bridge output terminals, when an appropriate power supply is connected across the bridge input terminals and when the bridge is unbalanced by the resistance valves of the strain gages.

According to the invention, there is provided a gas flow sensing device comprising a longitudinal plate cantilevered from one end of a cylindrical body, the longitudinal axis of said plate being parallel to the longitudinal axis of the body, said device producing an output voltage resulting from a bending of said longitudinal plate about an axis normal to said axis of the body in response to gas flow in a direction perpendicular to said axis of the body, characterised in that said longitudinal plate is a crystal comprising piezoelectric material; and in that it further comprises means for rotating said body, and commutator means supported by said body for making electrical connection with said crystal, the output voltage being an alternating output voltage having instantaneous peaks when the plane of said crystal is normal to the direction of the gas flow.

The gas flow sensing device may include means for continuously detecting the angular displacement of the cylindrical body; and, with or without such detecting means, the device may include an elongated reference crystal comprising piezoelectric material within the cylindrical body and arranged extending along the longitudinal axis of the body for providing a reference voltage for the first mentioned crystal.

A multiple sensing device incorporating, as essential integers, the angular rate and linear acceleration sensing devices described below and, as optional integers, the electric field, magnetic field and gas flow sensing devices also described below is the subject of our parent European Patent Application EP—A—0040191.

In order that the invention will be more clearly understood, it will now be disclosed in greater detail with reference to the accompanying drawings, in which:

Figs. 1—5 are simplified illustrations of magnetic field, electric field, gas flow, linear acceleration and angular velocity sensing probes, the gas flow sensing probe of Fig. 3 showing an arrangement of a longitudinal plate and cylindrical body that can be used in an embodiment of the invention;

Figs. 6A—6D are views illustrating, in simplified form, four consecutive positions of the sensing rotor of Fig. 5;

Figs. 7A—7D are figures illustrating, consecutively, the side views corresponding to the views of Figs. 6A—6D, respectively;

Fig. 8 illustrates the output of the two crystals of Figs. 6A—6D and 7A—7D;

Fig. 9 illustrates the sum of the voltages generated as illustrated in Fig. 8;

Fig. 10 is an exploded cross-sectional view of a portion of a multiple sensing device incorporating a gas flow sensing device that embodies the invention;

Fig. 11 is a cross-sectional view of an electric motor rotor that may be employed in combination with the multiple sensing device of Fig. 10;

Fig. 12 is a cross-sectional view showing the multiple sensing device portion of Fig. 10 in an assembled condition with other elements;

Fig. 13 is a cross-sectional view of a multiple sensing device which omits a gas flow sensing device, but illustrates certain features applicable to an embodiment of the invention; and

Fig. 14 is a simplifed illustration of the use on an aircraft of a pair of multiple sensing devices, each device incorporating a gas flow sensing device embodying the invention.

The present invention is directed to the provision of a gas flow sensing device, particularly adaptable for use on aircraft, but which may of course have other applications. Although the gas flow sensing device is individually useful and thus need not be combined in a unitary assembly with devices that sense other physical parameters, it is nonetheless readily adaptable to being so combined and will be described hereinafter in that context.

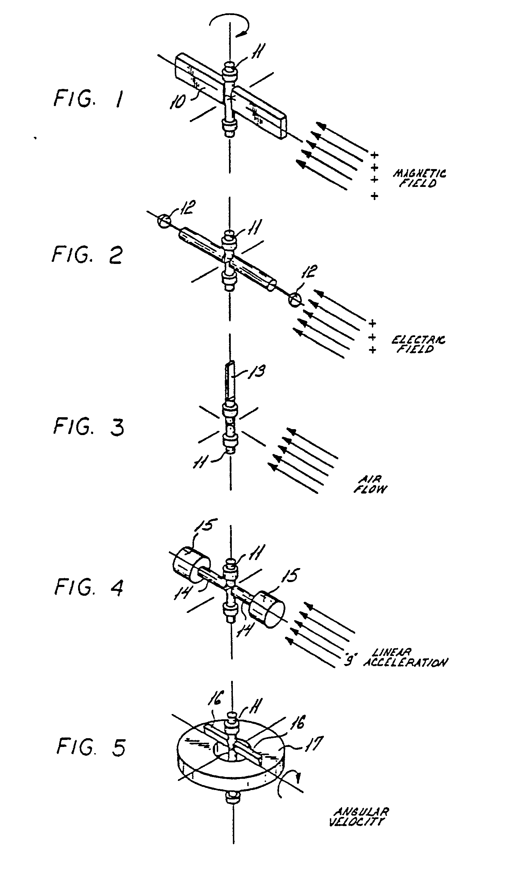

Referring now to the drawings, Fig. 3 illustrates in simplified form the principles of operation of the gas flow sensing device with which the present invention is concerned. Figs. 1, 2, 4 and 5 similarly illustrate the principles of operation of other sensing devices, one or more of which may be incorporated with the gas flow sensing device in a multiple sensing device.

Referring to Fig. 1, a magnetic field sensing probe is comprised of a pair of identical coils 10 mounted in a column plane on opposite sides of a shaft 11, for rotation with the shaft. Assuming the shaft extends into the coordinate direction Z and that the coils are connected externally by way of a suitable commutator, the probe of Fig. 1 will produce an alternating voltage of a frequency corresponding to the rotary speed of this shaft, and having an instantaneous peak when the axis of the coils is aligned with an external magnetic field, such as the earth's magnetic field. The magnitude of the output voltage is dependent upon the component of the external magnetic field in the X/Y plane. In the arrangement of Fig. 1, it is apparent that the greatest portion of the output voltage is developed by the radially outermost portions of the coils.

The output voltage is a sine wave when the field is linear. when the incident magnetic field is not linear; i.e., contains gradients, harmonics of the fundamental are generated. In the simple case, the second harmonic is the most dominant. In effect, the main field and the gradient fields give uniquely different signal frequencies.

In the electric field sensing probe illustrated in Fig. 2, a pair of electrodes 12 extend radially in opposite directions from the shaft 11, with the radially outermost portions of the electrodes being uninsulated. The radially intermediate portions of the electrodes are preferably insulated. It is apparent that, with the inner ends of the electrodes connected externally of the probe by way of a suitable commutator, the probe will produce a sine wave voltage output of a frequency corresponding to the rate of rotation of the shaft 11. The voltage arises from the fact that the non-insulated radially outer ends of the electrodes 12 rotate in a static electric field, such as the static electric field of the earth, whereby the instantaneous maximum of the sine wave voltage output occurs when the electrodes are aligned with this electric field. The amplitude of the voltage corresponds to the component of the static electric field in the X/Y plane.

In the gas flow sensing probe of Fig. 3, with which the invention is concerned, a longitudinal piezoelectric crystal 13 of planar configuration is mounted in a cantilevered fashion on one end of the shaft 11 for rotation therewith. The longitudinal axis of the shaft 11, and the crystal is arranged so that it may be bent about an axis normal to the axis of the shaft 11. Suitable electrodes of conventional nature (not shown) are affixed to the crystal, so that bending of the crystal about the axis normal to the axis of the shaft 11 results in the generation of an output voltage, which may be directed externally of the probe by a suitable commutator assembly. If a component of a gas flow is in a direction perpendicular to the shaft axis, it is apparent that the gas flow, impinging upon the crystal, will bend the crystal so that the output voltage will be an alternating voltage having a frequency corresponding to the rate of rotation of the shaft 11 with the instantaneous peaks occurring when the plane of the crystal is normal to the direction of the gas flow. The crystal may be referred to as a "bender" crystal. In the arrangement of Fig. 3, the crystal 13 thus serves as a restoring spring and a signal generator, and may be advantageously employed as an air mass data probe.

In the linear acceleration sensing probe of Fig. 4, a pair of crystals 14 are mounted on opposite sides of the shaft 11, for rotation therewith. The crystals 14 are oriented to be compressible in a direction normal to the shaft 11. If desired, suitable masses 15 may be provided at the radially outer extremities of the crystals 14. If suitable leads are connected conventionally to the crystals 14, and directed externally of the probe by way of a suitable commutator assembly, it is apparent that an alternating output voltage will be produced having a frequency corresponding to the rate of rotation of the shaft. The instantaneous maximum of the voltage occurs when the crystals are aligned with a component of linear acceleration in the X/Y plane, and the amplitude of the output voltage thus corresponds to the linear acceleration of the shaft in the X/Y direction. The sensitive axes of the crystals are thus oriented to react to acceleration parallel to the spin plane of the probe. The two crystals are electrically interconnected in order to provide an additive output for these two elements.

In the angular velocity sensing probe of Fig. 5, two crystals 16 are also mounted on opposite sides of the shaft 11. In the arrangement of Fig. 5, however, the crystals are mounted to be bendable, and have bending axes normal to the axis of the shaft. If desired, a reaction mass such as annular mass 17 may be provided symmetrically at the radially outer ends of the crystals. The arrangement of Fig. 5 constitutes an angular velocity probe, based upon the gyroscopic operation of an elastically restrained body rotating at high velocity. The inertial member and the restoring springs thus constitute the same element, as in the case of the air mass data probe of Fig. 3 and the linear acceleration probe of Fig. 4. The two bender crystals are arranged in a dipole fashion for common mode rejection and inertial balance. In the arrangement of Fig. 5, angular momentum of the masses reacting as a result of an applied angular velocity at right angles to the spin axis of shaft 11, results in the generation of a voltage by the crystals which is sinusoidal in distribution and exhibits a frequency identical to the rate of rotation of the shaft. The two crystals of the arrangement of Fig. 5, are preferably interconnected to their respective commutators in the opposite sense from that of the device of Fig. 4.

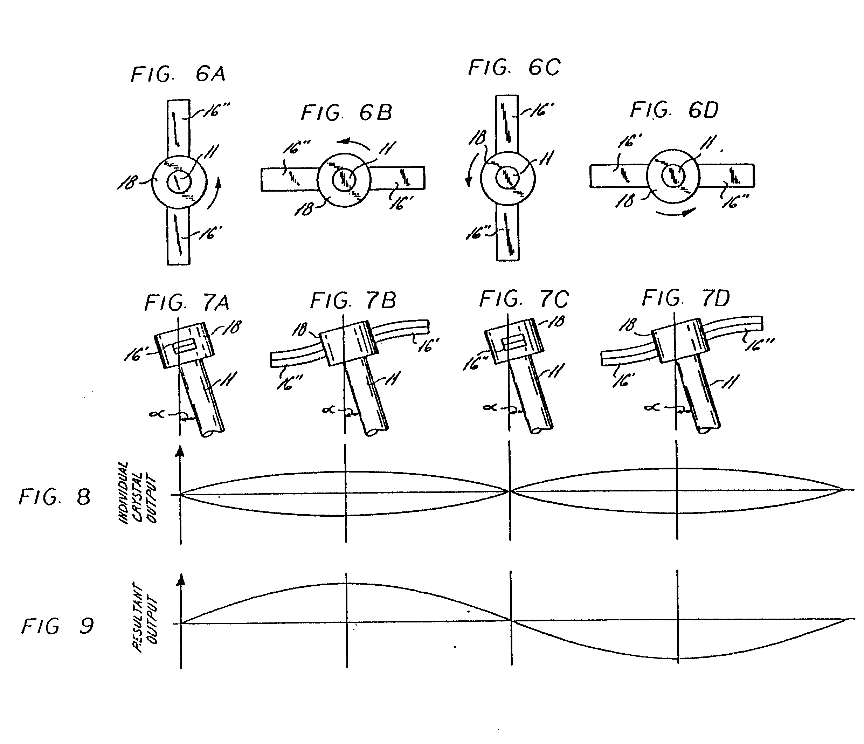

The rate gyro operation of the angular velocity probe of Fig. 5 may be more readily understood with reference to Figs. 6—9. Thus Figs. 6A—6D represent four consecutive positions of the crystals, with counterclockwise revolution, as may be seen from the end of the shaft 11. In these figures, the two crystals are identified as crystals 16' and 16''. The shaft is assumed to be continuously rotating. Referring to Fig. 7, which depicts a side view of the device of Fig. 6, it is assumed that the axis of the shaft 11 has been displaced through an angle alpha. The shaft 11 and the hub 18 on the shaft in which the crystals 16' and 16'' are mounted, are adequately rigid so that they both may substantially instantaneously exhibit their new positions without deformation. The radially outer ends of the crystals however, due to gyroscopic action, remain for some time oriented as though the angular displacement of the shaft 11 had not occurred. This is, of course, particularly true if a reaction mass is linked to the radially outer ends of the crystals. As a consequence of the gyroscopic action, the crystals bend about their mechanical axes, as illustrated in Figs. 7A—7D, respectively, to result in output voltages as illustrated in Fig. 8. It is thus seen that the instantaneous peaks of the resultant alternating voltage occur when the crystals extend normal to the axis of rotation about the angle alpha. Since the outputs of the crystals are of different polarity, the crystals are interconnected in reverse senses, to produce the resultant output voltage as illustrated in Fig. 9.

In the angular velocity probe described in conjunction with Figs. 5—9, it is apparent that the crystals are employed as gyroscopic elements, with or without the provision of a reaction mass, and that the strain on the crystals is proportional to input angular rate. The amplitude of the output is proportional to the input angular rate, and the phase of the output is related to the direction of the angular displacement of the rotating shaft. In other words, if the shaft 11 is angularly displaced about an axis in the X/Y plane, the output of the rate gyro or angular velocity sensor of Fig. 5 is proportional to the rate of rotation about the axis in the X/Y plane, then the phase of the output voltage is related to the orientation of the axis of rotation in the X/Y plane, assuming again that the shaft 11 extends in the Z direction.

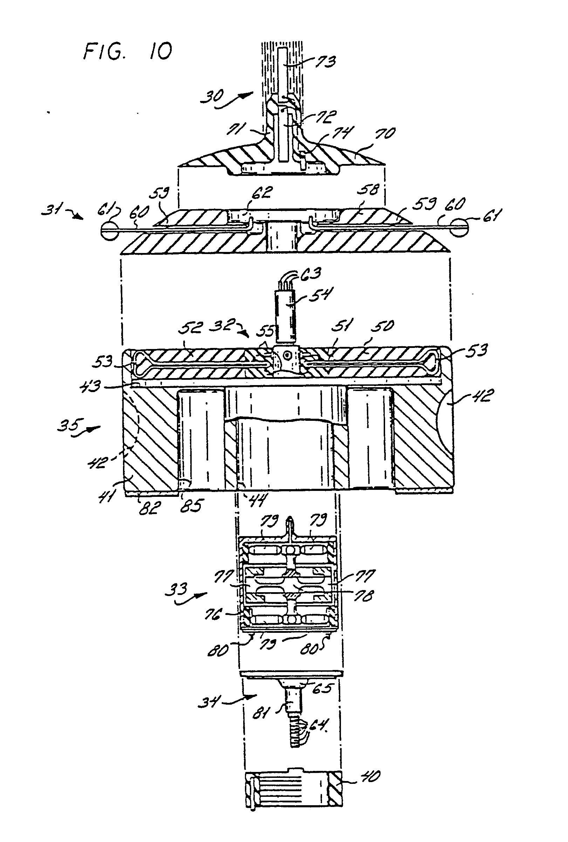

Fig. 10 is an exploded partially cross sectional view of a portion of a multiple sensing device incorporating several sensing devices, including a gas flow sensing device which is a preferred embodiment of the invention. This view illustrates primarily the rotor components, to show that they can be of modular construction, whereby a multi-probe assembly may be fabricated of any of the desired sensing probes. It will, of course, be apparent that the cover construction for such a multi-probe assembly will be dependent upon the components chosen for use in the assembly.

As illustrated in Fig. 10, the multiple sensing device is comprised of a gas flow sensing probe 30, an electric field sensing probe 31, a magnetic field sensing probe 32, an angular probe and linear acceleration sensing probe 33, and a slip ring 34 and brush block assembly 40. In addition, the multiple sensing device includes a gas drive ring 35 for the pneumatic drive of the rotor. Each of the elements of Fig. 10, except the brush block assembly 40, constitute a part of the rotor.

The gas drive assembly 35 may be comprised of a metallic ring 41 having gas drive slots 42 on its radially outer periphery, whereby the ring may be rotated by directing a jet of air tangentially against this outer periphery. The ring 41 has a recess 43 in one face thereof, for receiving the magnetic field sensing probe 32. In addition, a circular coaxial recess 44 is provided in the other face for receiving the angular velocity and linear acceleration sensing probe 33.

The magnetic field sensing probe is comprised of a circular disc 50 of insulating material, within which the two magnetic sensing coils 51 and 52 are embedded. The coils 51 and 52 have radially outer extremities 53 which extend axially of the disc for substantially its full axial dimension. The coils 51 and 52, which are identical, have radial returns squashed down axially, as illustrated in Fig. 10, with the axial extension of the radially innermost portions of the coils being at a minimum. As a consequence, the radial returns are so positioned with respect to the spin axis of the multiple sensing device that the axial return is near the center of rotation. This in effect gives the section line at the major radius most of the charge generating capacity for the magnetic field sensing probe. The disc 50 is fitted, by suitable conventional means, for rotation on shaft 54. The shaft 54 is preferably hollow, and serves as a bearing for the assembly, to extend through a housing (not shown in Fig. 10). Suitable interconnecting wires for the coils 51 and 52, as well as for interconnecting the coils to the slip ring assembly, are illustrated at 55.

The shaft 54 may be affixed only to the magnetic field sensing probe, with the ring 50 being fitted tightly for rotation in the recess 43. Alternatively, the shaft 54 may extend through the ring 50 and be fitted to the gas drive ring 41.

The electric field sensing probe 31 and the gas flow sensing probe 30 must be located outside of the housing of the device in order to sense the external electric fields and external gas flow. Consequently, the electric field sensing probe may be comprised of an insulating disc 58 having a central bore adapted to fit over the shaft 54. The disc 58 may be connected for rotation to the shaft 54 by any conventional means. The disc 58 has a pair of radially extending holes 59 through which the electrodes 60 extend. Suitable enlarged ends, such as conductive balls 61, may be provided at the ends of the electrodes 60 for sensing the earth's static electric field. The inner ends of the electrodes 60 extend into a recess 62 in the face of the disc 58 for interconnection with conductors 63 advantageously extending completely through the device for interconnection with the slip rings 64 of the slip ring assembly 65.

As will be apparent from the following disclosure, a portion of the housing of the device may extend between the magnetic field probe and the electric field probe.

The gas flow sensing probe 30 is also comprised of an electrically insulating rotating body member 70 having a disc shaped base adapted to fit for rotation either into the recess 62 of the electric field sensing probe or, if desired, directly on the end of the shaft 54. The body 70 may be an axial extension 71 for enclosing a piezoelectric crystal 72. A further piezoelectric crystal 73 extends axially beyond the insulating body 70, to be impinged upon by the air flow externally of the device as above described. The crystal 72 within the extension 71 serves as a reference, and is therefore interconnected differentially with the exposed crystal 73. The conductor connected to those crystals may be led to a connector 74 affixed in the base 70, for interconnection with the slip ring conductors 63.

The angular velocity sensing probe and linear acceleration sensing probe may form a combined unit 33, as illustrated in Fig. 10. For this purpose, the unit 33 may be comprised of a cylindrical housing 76 adapted to be fitted for rotation in the recess 44 of the gas drive ring. The housing 76 may contain a pair of radially extending crystals 77 at a central portion extending to a hub 78, to serve as the linear acceleration sensing probe as discussed in accordance with the above principles. The linear acceleration sensing probe is disposed axially centrally of the unit 33. In addition, a plurality of pairs of bender crystals 79 may be positioned axially on each side of the linear acceleration sensing probe for the sensing of angular velocity as discussed above. Suitable conventional conductors are provided (but this is not shown) connected to the crystals, for interconnection with the slip ring assembly 65.

The slip ring assembly 65 may be fitted directly to the lower end of the unit 33, for example, on studs 80 on the lower end of the unit 33, in order to complete the rotary structure of the multiple sensing device. The slip ring assembly has a plurality of slip rings 64, adapted to be connected to each of the sensing probes as above discussed. While the drawing of Fig. 10 does not show these conductors, it is apparent that suitable apertures may be provided in the housings of the structure, for enabling the necessary interconnections. For this purpose, it is of course not necessary that a single shaft extend throughout the rotor assembly, since the individual components of the structure may be provided with internally embedded conductors for this purpose. As a consequence, it is apparent that a modular construction may be achieved, whereby the elements may be interconnected as desired.

While the brush block 40 for cooperation with the slip ring assembly 34 is not a rotary member, it has been illustrated in simplified form in Fig. 10, to illustrate in general a preferred manner by which the signals generated in the various probes may be led externally of the device. The slip rings 64 may be at the axial end of the slip ring assembly, axially beyond a bearing portion 81 of the rotor assembly, in order to simplify construction of the device.

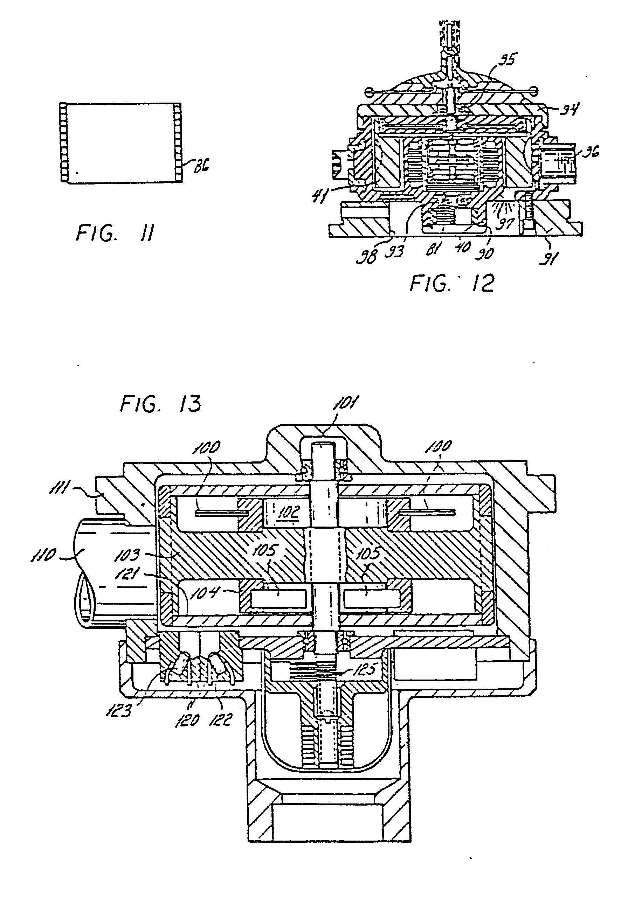

In the use of the device, it is, of course, necessary to establish the phases of the different alternating voltages generated by the sensing devices, in order to be able to ascertain the directions of the various sensed physical quantities. For this purpose, reference markings 82 may be provided on one face of the gas drive ring 41, for cooperation with a suitable sensing device, such as a photoelectric sensing device 123 of conventional nature as illustrated in Fig. 13. It will, of course, be apparent that any other forms of reference generator or conventional nature may alternatively be employed in combination with the multi-probe or multiple sensing device of Fig. 10.

While the multiple sensing device of Fig. 10 is particularly adaptable for gas drive, it will be apparent that it may also be employed with an electric motor drive. For this purpose, the gas drive ring 41 is provided with an annular recess 85 radially outwardly of the recess 44. A motor rotor 86 for example as illustrated in Fig. 11, may be mounted in the recess 85, for rotation with the rotor assembly of the sensing device. The recess 85 has a sufficient radial dimension that a stator assembly affixed to the housing (not shown in Fig. 10) may also be fitted into recess 85. For example, the stator may extend axially from the end housing of the assembly. It is, therefore, apparent that the device of Fig. 10, may be modified for electric drive with a minimum of modification.

Fig. 12 shows the multiple sensing device of Fig. 10 in cross section, with the elements of the rotor interconnected together in their preferred form. In addition, it shows the brush block assembly 40 mounted in a recess in insulating housing 90 for cooperation with a slip ring assembly. The housing member 90 serves as one cover of the device, and is bolted to a metal base block 91, for example, to enable the rigid mounting of the device as desired. In addition, the central portion of the housing 92 is affixed to the base 91. The housing 90 is provided with suitable bearings 93, to engage the portion 81 of the shaft of the rotor. The upper portion 94 of the housing, which serves as a cover, extends between the magnetic and electric field sensing probes, and is provided with bearings 95 for the shaft portion 54. The portions 92 and 94 of the housing may also be of insulating material.

As discussed above, the multiple sensing device may be formed of a lesser number of components. Thus as illustrated in Fig. 13, the device omits a gas flow sensing device. Nonetheless, it serves to show certain elements that could be utilized in a gas flow sensing device embodying the invention. In Fig. 3, a rotary unit incorporating only a pair of bender crystals 100 is mounted for rotation with a shaft 101. The crystals 100, as is apparent in Fig. 13, do not extend inwardly to the shaft, their bases being fixed in a suitable block or hub 102 radially outwardly spaced from the shaft 101 proper. In the arrangement of Fig. 13, the hub or blocks 102 are affixed to one side of a web of the gas drive ring 103, and a further hub or set-up blocks 104 is provided on the other side of the web. From these blocks or hub, a pair of additional bender crystals 105 are provided extending radially inwardly. The inner ends of these latter crystals are not rigidly affixed to any component of the structure. The crystals 105 are mounted so that they are bendable about axes parallel to the shaft 101. As a consequence, the output of the crystals 100 corresponds to angular velocity and the output of crystals 105 corresponds to linear acceleration.

A gas inlet 110 is provided in the housing 111 for driving the shaft 101. In addition, the reference generator 120, discussed above, is mounted in the housing 111 for cooperation with the suitable reference scale 121 on a face of the gas drive ring 103. The reference generator may comprise a reference source of light 122, such as an LED, cooperating with a suitable photosensitive device 123 of conventional nature, for producing a reference signal output related to the position of the rotor of the device. The device of Fig. 13 is provided with a suitable slip ring and brush assembly 125.

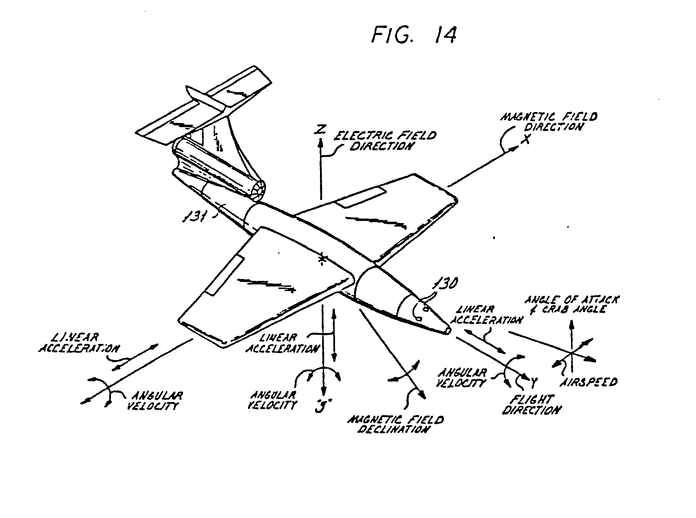

As illustrated in Fig. 14, a pair of multiple sensing devices 130 of the type illustrated in Fig. 10 which includes a gas flow sensing device, may be mounted with orthogonal axes on an aircraft 131. This arrangement enables the inputting of sufficient data to the aircraft to enable the calculation of the earth's magnetic and electrical fields, as well as external air flow and linear acceleration and angular velocity of the aircraft.

It is of course apparent that the electric circuits for comparison of the phase of the reference generator with the measured gas flow and other physical parameters may be of conventional nature.

Typical performance characteristics of a multiple sensing device incorporating an embodiment of the gas flow sensing device of the invention, are provided in table 1 of this disclosure.

TABLE 1

| PARAMETERS | I<br>X/Y<br>AXIS MAG | II<br>"Z"<br>AXIS MAG | III<br>X/Y<br>AXIS ELEC | IV<br>AIR<br>SPEED | V<br>AIR<br>SPEED | VI<br>X/Y<br>ANG. VEL. | VIII<br>X/Y<br>LIN. ACCEL. |
|---|---|---|---|---|---|---|---|
| SCALE FACTOR (V.D.C.) | 5.V/GS | 5.V/GS | .017 V/V/MTR | .010 V/MPH | .165 V/DEG | .017 V/DEG/SEC | .250 V/"g" |
| BIAS (TOTAL VECTOR) | <.002 GS | <.01 GS | <3.V/MTR | <2. MPH | <.5° | <.02°/SEC | <.002 "g" |
| NULL UNCERT. (HR TO HR) | <.0005 GS RMS | <.0005 GS RMS | <.5 V/MTR RMS | <.3 MPH RMS | <.1° RMS | <.003°/SEC RMS | <.0005 "g" RMS |
| NULL UNCERT. (TRN ON TO)<br>(TRN ON ) | <.0008 GS PP | <.0005 GS PP | <1.V/MTR PP | <.5 MPH PP | <.25° PP | <.008°/SEC PP | .0008 "g" PP |
| NULL UNCERT. (SPIN VEL.)<br>(VAR. ±10%) | <.001 GS PP | <.0005 GS PP | <1. V/MTR PP | <2. MPH PP | <.30° PP | <.01°/SEC PP | <.002 "g" PP |
| LINEAR OPERATING RANGE | 1.0 GS | 1.0 SG | 300.V/MTR | 500. MPH | ±30.° | 300°/SEC | 20 "g" |
| MAX. OVERRANGE INPUT | 5.0 GS | 5.0 GS | 1000. V/MTR | 1000. MPH | ±180° | 1200°/SEC | 100 "g" |
| LINEARITY (%DEVIA. FR)<br>(NOM. S.F.) | <1.% | <1.% | <2.% | <2.% | <1.5% | <1.% | <.5% |
| SYMMETRY (SLOPE AGGREEMENT) | <1.% | <1.% | <2.% | — | <1.5% | <1.% | <.5% |
| CROSS AXIS COUPLING | <2.% | — | <2.% | BY THE COS. OF AIRFLOW | BY THE AMPLITUDE OF AIRSPEED | <2.% | <.5% |
| CROSS QUANTITY ALIGNMENT | <±.5° | <±.5° | <±.5° | <±.5° | <±.5° | <±.25° | 0° (REF.) |
| CROSS QUANTITY COUPLING<br>I. X/Y AXIS MAG FIELD | 100% | — | NEGL. | NEGL. | NEGL. | NEGL. | NEGL. |
| II. "Z" AXIS MAG FIELD | — | 100% | " | " | " | " | " |
| III. X/Y AXIS ELEC FIELD | NEGL. | NEGL. | 100% | " | " | " | " |
| IV. X/Y AIR SPEED | " | " | .001 V/MTR/MPH | 100% | — | " | " |
| V. ANGLE OF AIR FLOW | " | " | NEGL. | — | 100% | " | " |
| VI. X/Y AXIS ANG VEL | " | " | " | NEGL. | NEGL. | 100% | <.00005 "g"/ DEC/SEC |
| VII. X/Y AXIS LIN ACCEL | " | " | " | <.02 MPH/ "g" | <.05°/ "g" | <.0002°/SEC/ "g" | 100% |

## Claims

1. A gas flow sensing device comprising a longitudinal plate (13; 73) cantilevered from one end of a cylindrical body (11; 54), the longitudinal axis of said plate being parallel to the longitudinal axis of the body, said device producing an output voltage resulting from a bending of said longitudinal plate about an axis to said axis of the body in response to gas flow in a direction perpendicular to said axis of the body, characterised in that said longitudinal plate is a crystal (13; 73) comprising piezoelectic material; and in that it further comprises means (41; 86; 103) for rotating said body (11; 54) and commutator means (65) supported by said body (11; 54) for making electrical connection with said crystal, the output voltage being an alternating output voltage having instantaneous peaks when the plane of said crystal (13; 73) is normal to the direction of the gas flow.

2. A device according to claim 1, characterised by means (82; 120—123) for continuously detecting the angular displacement of said body (11; 54).

3. A device according to claim 1 or 2, characterised by an elongated reference crystal (72) comprising piezoelectric material within said body (11; 54) and arranged extending along the longitudinal axis thereof, for providing a reference voltage for the first mentioned crystal (13; 73).

4. A device according to any one of the preceding claims, characterized in that said body (11; 54) is an electrically insulating body.

## Patentansprüche

1. Gasströmungsmeßgerät mit einer an einem Ende eines zylindrischen Körpers (11; 54) nach Art eines einseitig eingespannten Balkens befestigten länglichen Platte (13; 73), deren Längsachse parallel zu der Längsachse des zylindrischen Körpers verläuft, wobei das Gasströmungsmeßgerät eine Ausgansspannung abgibt, die durch ein Biegen der länglichen Platte um eine zu der Achse des Körpers rechtwinkligen Achse infolge einer in ihrer Richtung rechtwinklig zu der Achse des Körpers verlaufenden Gasströmung hervorgerufen wird, dadurch gekennzeichnet, daß die längliche Platte ein piezoelektrisches Material enthaltendes Kristall (13, 73) ist, und daß den Körper (11; 54) in Umdrehungen versetzende Mittel (41; 86; 103) sowie an dem Körper (11; 54) gehalterte Kommutatoreinrichtungen (65) vorhanden sind, die eine elektrische Verbindung zu dem Kristall herstellen, wobei die Ausgangsspannung eine Ausgangswechselspannung ist, die zeitliche Spitzen aufweist, wenn die Ebene des Kristalls (13, 73) normal zu der Richtung der Gasströmung steht.

2. Gasströmungsmeßgerät nach Anspruch 1, dadurch gekennzeichnet, daß Mittel (82; 120—123) zum kontinuierlichen Erkennen der Winkellage des Körpers (11; 54) vorgesehen sind.

3. Gasströmungsmeßgerät nach Anspruch 1 oder 2, dadurch gekennzeichnet, daß in dem Körper (11; 54) ein längliches piezoelektrisches Material enthaltendes Referenzkristall (72) vorhanden ist, das derart angeordnet ist, daß es sich längs der Längsachse des zylindrischen Körpers (11; 54) erstreckt, und für erstgenannte Kristall (13; 73) eine Referenzspannung erzeugt.

4. Gasströmungsmeßgerät nach einem der vorhergehenden Ansprüche, dadurch gekennzeichnet, daß der Körper (11, 54) ein elektrisch isolierender Körper ist.

## Revendications

1. Dispositif détecteur d'écoulement de gaz comprenant une plaque longitudinale (13; 73) montée en porte-à-faux sur une extrémité d'un corps cylindrique (11; 54), l'axe longitudinal de ladite plaque étant parallèle à l'axe longitudinal du corps, ce dispositif produisant une tension de sortie résultant d'une flexion de ladite plaque longitudinale selon un axe perpendiculaire audit axe du corps en réponse à un écoulement de gaz dans une direction perpendiculaire audit axe du corps, caractérisé en ce que ladite plaque longitudinale est un cristal (13, 73) comprenant une matière piézoèlectrique, et en ce qu'il comprend en outre des moyens (41; 86; 103) pour entraîner ledit corps (11; 54) en rotation et des moyens collecteurs (65) portés par ledit corps (11; 54) et pour assurer une liaison électrique avec ledit cristal, la tension de sortie étant une tension de sortie alternative ayant des crêtes instantanées lorsque le plan dudit cristal (13; 73) est perpendiculaire à la direction du courant de gaz.

2. Dispositif suivant la revendication 1, caractérisé en ce qu'il comprend des moyens (82; 120—123) pour détecter en continu le déplacement angulaire dudit corps (11; 54).

3. Dispositif suivant la revendication 1 ou 2, caractérisé en ce qu'il comprend un cristal de référence (72) de forme allongée comprenant une matière piézoélectrique à l'intérieur dudit corps (11; 54) et agencé de façon à s'étendre le long de l'axe longitudinal de celui-ci pour fournir une tension de référence pour le premier cristal mentionné (13; 73).

4. Dispositif suivant l'une quelconque des revendications précédentes, caractérisé en ce que ledit corps (11; 54) est un corps électriquement isolant.

FIG. 1

MAGNETIC FIELD

FIG. 2

ELECTRIC FIELD

FIG. 3

AIR FLOW

FIG. 4

'g' LINEAR ACCELERATION

FIG. 5

ANGULAR VELOCITY

FIG. 6A  FIG. 6B  FIG. 6C  FIG. 6D

FIG. 7A  FIG. 7B  FIG. 7C  FIG. 7D

INDIVIDUAL CRYSTAL OUTPUT

FIG. 8

RESULTANT OUTPUT

FIG. 9

FIG. 10

FIG. 11

FIG. 12

FIG. 13

FIG. 14